# EUROPEAN PATENT SPECIFICATION

(11) **EP 3 043 311 B1**
(45) Date of publication and mention of the grant of the patent: **02.01.2019**
(21) Application number: 14840286.0
(22) Date of filing: 21.05.2014
(51) Int. Cl.: A63F 13/798, A63F 13/352, A63F 13/46, A63F 13/47, G06Q 50/10

(54) **INFORMATION PROCESSING DEVICE**
INFORMATIONSVERARBEITUNGSVORRICHTUNG
DISPOSITIF DE TRAITEMENT D'INFORMATIONS

(30) Priority: 02.09.2013 JP 2013181631
(43) Date of publication of application: 13.07.2016
(73) Proprietor: Sony Interactive Entertainment Inc., Tokyo 108-0075 (JP)
(72) Inventor: HONDA, Shinichi, Tokyo 108-0075 (JP); KARIYA, Shinichi, Tokyo 108-0075 (JP)
(74) Representative: Müller Hoffmann & Partner
(86) International application number: PCT/JP2014/063516
(87) International publication number: WO 2015/029512

(56) References cited:
- WO-A1-2004/114188
- JP-A- 2009 165 562
- JP-A- 2009 525 807
- JP-A- 2011 217 762
- JP-A- 2012 106 110
- JP-A- 2013 168 177
- US-A1- 2005 278 041
- US-A1- 2006 223 599
- US-A1- 2009 093 287
- US-A1- 2009 093 287
- Anonymous: "Swiss-system tournament - Wikipedia", , 17 August 2013 (2013-08-17), XP055353517, Retrieved from the Internet: URL:https://en.wikipedia.org/w/index.php?t itle=Swiss-system_tournament&oldid=5689202 23 [retrieved on 2017-03-10]

## Description

### [Technical Field]

The present invention relates to an information processing apparatus, an information processing method, a program, and an information storage medium wherein evaluation of an action carried out between a plurality of users or user groups is carried out.

### [Background Art]

When some action is carried out between a plurality of users (or user groups), for example, in a competition of a game, it is sometimes desired to evaluate a result of the action and carry out ranking. For example, in a competition of a game, it is desired to implement a process for calculating ranking of all users and finding a user having a strength substantially equal to that of a certain user on the basis of wins and losses in results where competitions are carried out among various users. Particularly, where a large number of users participate in a game, each of the users cannot be directly concerned with all of the remaining users and is concerned only with some users from among all of the users. In such a case as just described, it is difficult to simply juxtapose users and carry out ranking of all of the users on the basis of results of actions of users.

Therefore, in a technique so-called Elo rating system utilized, for example, in the chess or the like, the strength of each player is evaluated in the following manner. In particular, each player has points (rate) allotted thereto and, when a competition between players is carried out, the loser loses some allotted points while the winner acquires allotted points equal to those which the loser loses. At this time, the number of points transferred from the loser to the winner varies in response to a rate difference between the players before the competition. In particular, even if some player wins a different player having a lower rate than an own rate thereof (namely, a different player having a lower rank than an own rank of the player), only a small number of points are obtained. However, if some player wins a different player having a higher rate than an own rate thereof (namely, a different player having a higher rank than an own rank of the player), a great number of points are obtained. If the competition between the players is repetitively carried out in such a manner as just described, then each of the players comes to obtain a rate corresponding to the ability thereof. Therefore, by comparing the rates to each other, a difference of the ability between players who do not carry out a competition directly with each other can be evaluated.

US 2005/278 041 A1 describes a computer-implemented method for conducting an online tournament. After each round of the tournament, participants are placed in winner brackets or loser brackets for the next round depending on the result of their previous match. To equalize the number of matches played by each participant, a matchless progression to the next round via a bye is possible.

### [Summary]

### [Technical Problem]

The present invention has been made in view of such a situation as described above, and it is one of objects of the present invention to provide an information processing apparatus, an information processing method, a program, and an information storage medium wherein a user or a user group can be evaluated by a novel technique on the basis of results of actions carried out between users or user groups.

### [Solution to Problem]

The above-mentioned problem is solved by the subject-matter of the independent claims.

An information processing apparatus according to the present invention includes an action result acquisition unit configured to acquire, regarding a plurality of users or user groups, action result data indicative of a result of an action executed between the plurality of users or user groups, and an evaluation value calculation unit configured to execute a trace process by a plural number of times and calculate an evaluation value of each of the users or user groups in response to a number of times by which the user or user group is selected as a target in the plural number of times of the trace process, the trace process including a starting point selection process randomly selecting a user or a user group as a target from among the plurality of users or user groups, and a target selection process repetitively performing a process newly selecting, as a next target, an opponent user or opponent user group who has been an opponent of an action carried out by the user or user group selected as the target at present on a basis of the action result data until a predetermined condition is satisfied.

An information processing method according to the present invention includes a step of acquiring, regarding a plurality of users or user groups, action result data indicating results of actions carried out between the plurality of users or user groups, and a step of executing a trace process by a plural number of times and calculating an evaluation value of each of the users or user groups in response to a number of times by which the user or user group is selected as a target in the plural number of times of the trace process, the trace process including a starting point selection process randomly selecting a user or a user group as a target from among the plurality of users or user groups, and a target selection process repetitively performing a process newly selecting, as a next target, an opponent user or opponent user group who has been an opponent of an action carried out by the user or user group selected as the target at present on a basis of the action result data until a predetermined condition is satisfied.

A program according to the present invention is a program for causing a computer to function as an action result acquisition unit configured to acquire, regarding a plurality of users or user groups, action result data indicative of a result of an action executed between the plurality of users or user groups, and an evaluation value calculation unit configured to execute a trace process by a plural number of times and calculate an evaluation value of each of the users or user groups in response to a number of times by which the user or user group is selected as a target in the plural number of times of the trace process, the trace process including a starting point selection process randomly selecting a user or a user group as a target from among the plurality of users or user groups, and a target selection process repetitively performing a process newly selecting, as a next target, an opponent user or opponent user group who has been an opponent of an action carried out by the user or user group selected as the target at present on a basis of the action result data until a predetermined condition is satisfied. The program may be stored in a computer-readable information storage medium.

### [Brief Description of Drawings]

[FIG. 1]

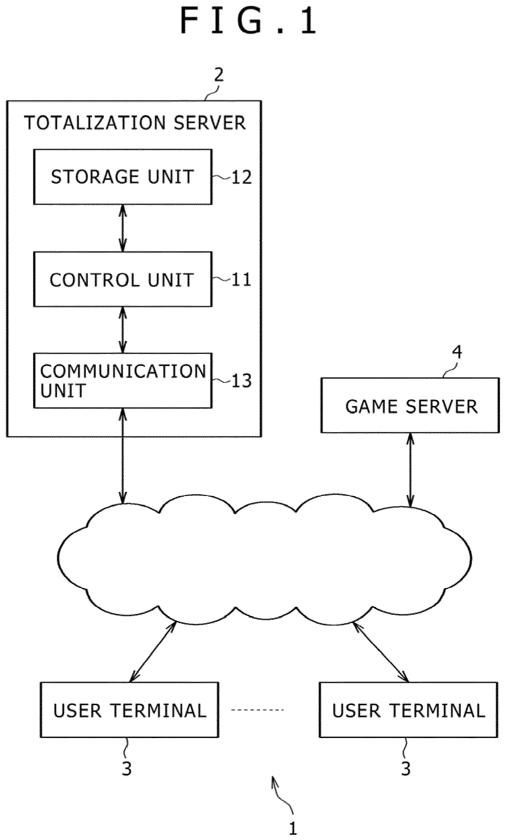

   FIG. 1 is a general configuration diagram of an information processing system according to an embodiment of the present invention.
[FIG. 2]

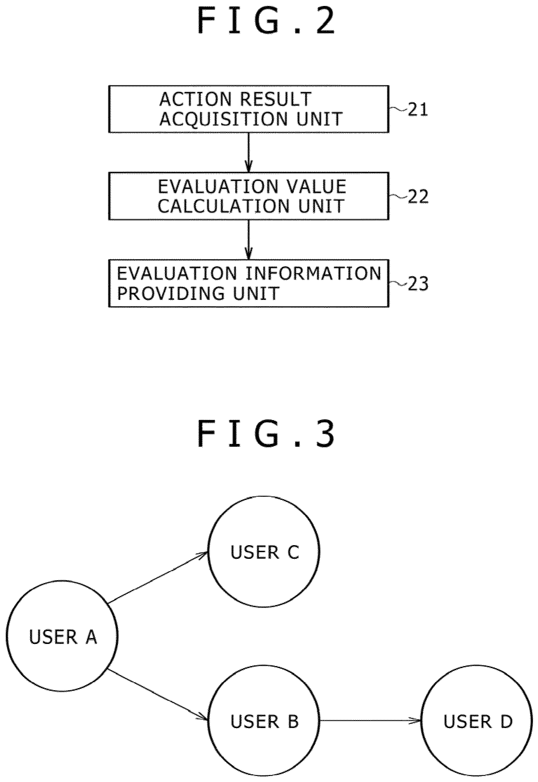

   FIG. 2 is a functional block diagram of an information processing apparatus according to the embodiment of the present invention.
[FIG. 3]
   FIG. 3 is a graph depicting an example of contents of action result data.
[FIG. 4]

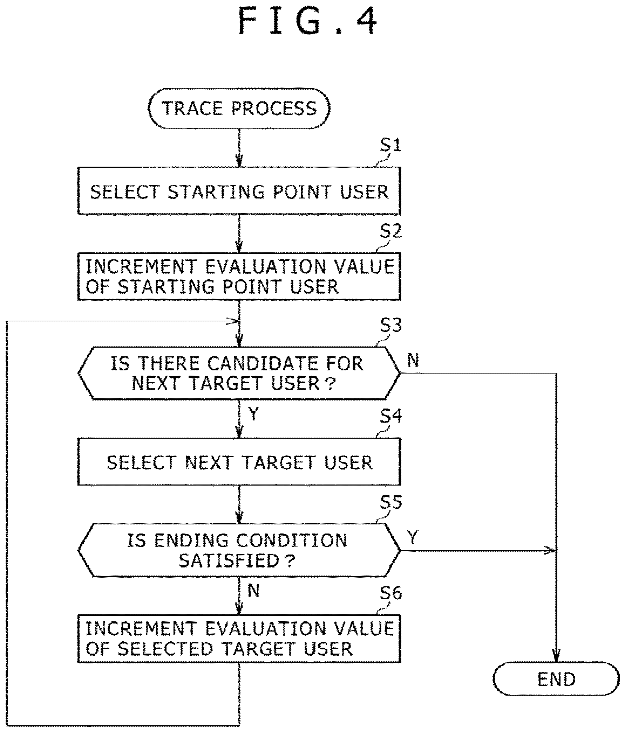

   FIG. 4 is a flow chart illustrating a flow of a trace process.
[FIG. 5]

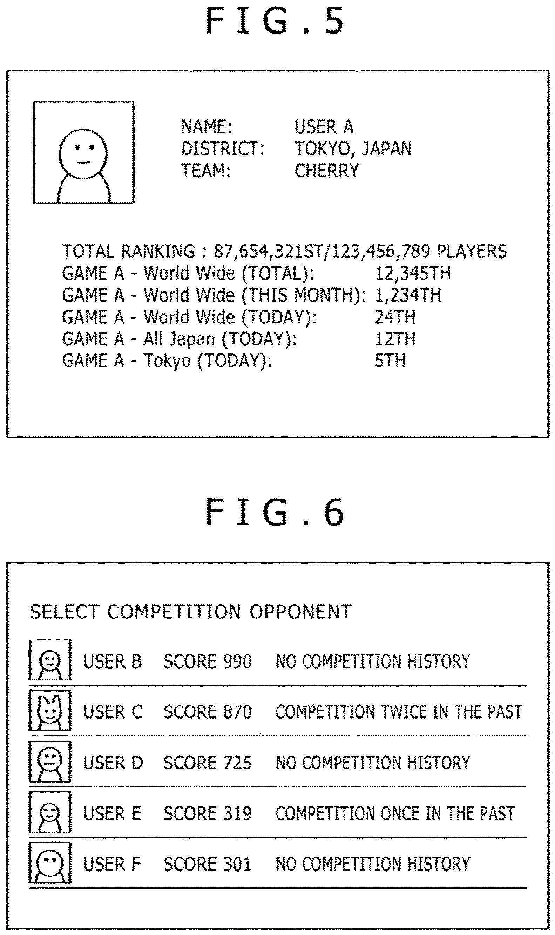

   FIG. 5 is a view depicting an example of a display image of ranking information.
[FIG. 6]
   FIG. 6 is a view depicting an example of a display image of competition opponent candidates.

### [Description of Embodiment]

In the following, an embodiment of the present invention is described in detail with reference to the drawings.

In the following, a case is described in which, as a particular example of an action carried out between a plurality of users or user groups, a game competition between users is handled. In this case, any kind of a game may be applied if victory or defeat is determined by a competition between the users. FIG. 1 is a configuration diagram of an information processing system 1 including an information processing apparatus according to the embodiment of the present invention. As depicted in FIG. 1, the information processing system 1 includes a totalization server 2, a plurality of user terminals 3, and a game server 4. The user terminal 3 is a terminal apparatus used by a user who participates in a game platform implemented by the information processing system 1, and may be, for example, a consumer game machine, a portable game machine, a smartphone, a personal computer or the like. Each of the user terminals 3 includes an operation device used for operation inputting by its user and a display screen for displaying various kinds of information.

The totalization server 2 is a particular example of the information processing apparatus according to the embodiment of the present invention, and includes a control unit 11, a storage unit 12, and a communication unit 13 as depicted in FIG. 1.

The control unit 11 is a CPU or the like and carries out various information processes in accordance with a program stored in the storage unit 12. The storage unit 12 is configured from a memory device such as a RAM and stores a program to be executed by the control unit 11 and data which are a processing target by the program.

The communication unit 13 is a communication interface such as a LAN card, and the totalization server 2 carries out transmission and reception of data to and from the plurality of user terminals 3 and the game server 4 through the communication unit 13.

The game server 4 is a server computer which provides a play function of a competition type game and executes a process of a game played by the user of each of the user terminals 3. Since the user terminal 3 carries out communication with the game server 4, the user can play a game provided by the game server 4 through the user terminal 3 and can enjoy a competition with a different user. Further, the game server 4 transmits action result data indicative of a result of a competition to the totalization server 2.

A function implemented by the totalization server 2 is described below with reference to a functional block diagram of FIG. 2. As depicted in FIG. 2, the totalization server 2 functionally includes an action result acquisition unit 21, an evaluation value calculation unit 22, and an evaluation information providing unit 23. The functions are implemented by the control unit 11 executing the program stored in the storage unit 12. The program may be provided to the totalization server 2 in a state in which it is stored in various information storage media such as an optical disk or may be provided to the totalization server 2 through a communication network such as the Internet.

The action result acquisition unit 21 acquires action result data indicative of a result of an action carried out between users. Since an action between the users which is an evaluation target is a competition of a game in the present embodiment, the action result data include information indicative of a result of a game competition carried out between the users. Such information as just described is acquired from the game server 4. For each combination of two users who carry out a competition of a game actually, the action result data includes at least information for specifying the two users and information indicating which user wins in a result of the competition. The information included in the action result data is used to configure a directed graph in which a user and a competition are indicated as a node and an edge (link), respectively.

Further, the action result data may include information relating to a result of a competition other than a win and a loss such as a score of a competition carried out between users. Further, the action result data may include information relating to a characteristic of a game of a competition (information of distinction between an easy mode and a hard mode or the like). Especially, if the two same users have carried out a competition therebetween by a plural number of times in the past, then the action result acquisition unit 21 may acquire, as the action result data, information obtained by totalization of the number of times of wins and losses in a competition by a plural number of times. For example, if a user A and a user B have carried out a competition by five times and a result of three wins and two losses is obtained, then the action result acquisition unit 21 may acquire information indicative of the result of three wins and two losses (winning percentage: 60%). Further, where a score for each competition is recorded, a totalized value of the score may be acquired as information of a result of the competitions. For example, if a user A and a user B have carried out a competition by three times and results of 3:2, 1:0, and 0:4 are obtained, then the action result acquisition unit 21 may acquire information indicative of a score of 4:6. Further, information obtained by combining the two kinds of information described above may be acquired. It is to be noted that the action result acquisition unit 21 itself may carry out totalization of competition results to acquire totalized action result data or may acquire totalized action result data from the game server 4.

The evaluation value calculation unit 22 executes an evaluation value calculation process for analyzing the action result data acquired by the action result acquisition unit 21 to calculate an evaluation value of each of a plurality of users who utilize the information processing system 1. The evaluation value is used as an index value indicative of what degree of strength each user has in the game. The evaluation value calculation process in the present embodiment is on the basis of a sort of a random method (Monte Carlo method) and statistically calculates an evaluation value of each user by executing a trial using a random number (hereinafter referred to as trace process) by a plural number of times. Therefore, even if the evaluation value calculation process is carried out by a plural number of times for the same action result data, the same result may not always be obtained. However, by carrying out a trial by a sufficient number of times, the accuracy of the analysis can be enhanced. A particular example of the evaluation value calculation process is hereinafter described.

The evaluation information providing unit 23 transmits, in response to a request from a user terminal 3, various kinds of information according to the evaluation value calculated by the evaluation value calculation unit 22 to the user terminal 3 of the requesting source. Consequently, the user terminal 3 of the requesting source can display various kinds of information relating to a strength of a user such as, for example, ranking information of the user on a display screen thereof to provide the information to the user.

In the following, a particular example of the evaluation value calculation process executed by the evaluation value calculation unit 22 is described. Here, contents of the evaluation value calculation process are described taking, as an example, a case in which it is assumed that four users A to D play a game utilizing the information processing system 1 and action result data indicative of a result of the competition are made a target of the evaluation value calculation process. FIG. 3 is a directed graph indicating a result of a competition among the four users. An edge (arrow mark) in FIG. 3 couples users who actually carry out a competition with each other, and a user indicated by an arrow mark represents a winner. In the example of FIG. 3, the user A loses in the competitions with the users B and C, and the user D wins in the competition with the user B. On the other hand, the user A and the user D, the user B and the user C, and the user C and the user D do not compete directly with each other.

Further, a concept of random tracer is introduced in the following description in order to explain contents of the trace process. In the trace process, one random tracer moves in accordance with a predetermined rule on such a directed graph as depicted in FIG. 3. More particularly, the random tracer moves in order from a starting point provided by a node of randomly selected one of users (hereinafter referred to as starting point user) on the graph such that one of users who have won a selected user is selected newly (namely, along an arrow mark of the directed graph). The movement of the random tracer ends when a node of a moving destination is not found any more or a given ending condition is satisfied as hereinafter described. It is to be noted that, in the following description, a movement of the random tracer from a certain node to a different node on a directed graph is referred to as hop. Further, a user corresponding to a node which is a moving destination of the random tracer is referred to as target user. A single time trace process corresponds to a series of processes for determining a moving path after one random tracer departs from a node of a starting point user and hopping is carried out by several number of times until the movement on the graph is ended. Then, the evaluation value calculation unit 22 adds an evaluation value to target users existing on the path along which the random tracer has moved. By executing such a trace process as just described by a sufficiently great number of times, the evaluation value calculation unit 22 calculates an evaluation value corresponding to a number of times by which the random tracer passes for each of the users. Since the random tracer selects a user who wins a target user (namely, a user who is stronger than the target user) as a new target user, a stronger user is selected as a target user by a greater number of times. Therefore, the evaluation value corresponding to a passing number of times of the random tracer represents the strength of the user.

Here, a flow of a trace process in one cycle is described with reference to a flow chart of FIG. 4.

First, the evaluation value calculation unit 22 selects a first target user (starting point user) who is to serve as a starting point of a random tracer (S1). This starting point user is selected at random from among all users included in the action result data. In particular, all users have a chance that they are selected equally as a starting point user. Here, as a particular example, it is assumed that the user A is selected as a starting point user from among four users. The evaluation value calculation unit 22 adds one point to the evaluation value of the selected starting point user (here, the user A) (S2).

Then, the evaluation value calculation unit 22 decides whether or not there exists a user (winning user) who has a history that it has won the target user (S3). If it is decided at S3 that there exists no winning user, then since this signifies that a next movement destination of the random tracer does not exist, the evaluation value calculation unit 22 ends the trace process. On the other hand, if a winning user exists, then the evaluation value calculation unit 22 selects one user as a next target user on the basis of a rule determined in advance from among the winning users (S4). For example, if the target user is the user A, then according to the action result data, two users of the user B and the user C have won the user A as depicted in FIG. 3. Therefore, the evaluation value calculation unit 22 selects one of the two winning users as a next target user. In particular, for example, the evaluation value calculation unit 22 may select a next target user at random. In this case, both of the users B and C are selected at a probability of 50% as a next target user.

Further, the evaluation value calculation unit 22 decides on the basis of a predetermined ending condition whether the random tracer is to actually hop to the node of the user selected at S4 or the movement of the random tracer is to be ended (S5). In particular, the evaluation value calculation unit 22 continues the movement of the random tracer on the basis of a fixed probability. For example, the evaluation value calculation unit 22 hops the random tracer to a next movement destination at a probability of 85% and ends the hop of the random tracer at a probability of 15%. The reason why such a process as just described is adopted is that it is intended to avoid such a state that the random tracer continues to move infinitely among a plurality of users having, for example, such a relationship as three-way standoff of rock-paper-scissors. By introducing the process at S5, it is possible to avoid that one random tracer continues to move infinitely and the movement is ended at a fixed probability.

It is to be noted that, in place of or in addition to the probability condition described above, the evaluation value calculation unit 22 may unconditionally end any further movement of the random tracer which has repeated hopping by a fixed number of times counting from the node of the starting point user. Alternatively, the probability at which the movement of the random tracer is ended by the decision at S5 may be increased as the number of times of hopping of the random tracer increases. Further alternatively, if one random tracer selects a node passed once by the random tracer once more again, then since this signifies that the movement route forms a loop, the movement of the random tracer may be ended there. Alternatively, when one random tracer selects the same user as a target user by a predetermined number of times, the movement of the random tracer may be ended.

If it is decided at S5 that the movement of the random tracer is to be continued, then the evaluation value calculation unit 22 actually hops the random tracer to the node of the selected next target user at S4 and adds one point to the evaluation value of the user (S6). It is to be noted that, when one random tracer passes the node of the same user by a plural number of times, the incrementing of the evaluation value may be carried out only at the first time whereas the evaluation value is not incremented at the second and succeeding times. The evaluation value calculation unit 22 returns the processing to S3 and continues a process for causing the random tracer to hop to a further next movement destination. For example, it is assumed that one random tracer selects the user A as a starting point user and selects the user B and the user D in order as a target user by the trace process described above and then ends the movement. In this case, the evaluation values of the three users of the user A, the user B, and the user D are individually incremented by one point.

As described above, the evaluation value calculation unit 22 executes the trace process represented by the flow of FIG. 4 repetitively for N random tracers. The evaluation values accumulated for the users as a result of the trace process carried out by N times are used as indices indicative of the strengths of the users. In the example of FIG. 3, since the user A has not won any one, the evaluation value is increased only when the user A itself is selected as a starting point user. On the other hand, the evaluation values for the users B and C may possibly be incremented not only when the users B and C themselves are selected as a starting point user but also when the user A is selected as a starting point user. Furthermore, the evaluation value for the user D may possibly be incremented not only when the user D itself is selected as a starting point user but also when any of the users A and B is selected as a starting point user. Therefore, when a trace process is executed repetitively by a sufficient number of times, the evaluation value of the users B and C is higher than that of the user A, and the evaluation value of the user D is higher than that of the user C. The relationship in magnitude of the evaluation values reflects actual repetition results of the users.

It is to be noted that the number N of times of the trace process executed in one cycle of the evaluation value calculation process is determined, for example, in response to the total number of users. Since the accuracy of the evaluation values increases as the execution time number N increases, where high accuracy is required as in the case where the order table of all users is to be made, it is preferable to increase the execution time number N. On the other hand, where the accuracy is not required very much, the execution time number N may be decreased in order to reduce the processing load.

Further, the evaluation value calculation unit 22 may use an evaluation value normalized by the execution time number N of the trace process for evaluation of a user. In this case, a final evaluation value is calculated by dividing an evaluation value obtained for each user as an accumulated value of the trace process by N times by N. If such normalization is applied, then, for example, when an evaluation value calculation process is executed every day using action result data indicative of a competition history till then, even if the evaluation value calculation result of the previous day and the today's evaluation value calculation result are different in the execution time number N of the trace process, the evaluation value obtained the previous day and the evaluation value obtained today can be compared with each other. Therefore, since the necessity to execute the trace process by an equal number of times in every time operation is eliminated, every time the evaluation value calculation process is executed, the execution time number N of the trace process can be changed in response to the processing load, required time period and so forth. Further, in place of the execution time number N of the trace process, an evaluation value may be normalized by the cumulative number of times of hopping in the trace process by totaling N times. Since this cumulative number of times of hopping coincides with the cumulative value of the point incremented for all users, by using this value, such normalization by which the total value of the evaluation values of all users becomes 1.0 can be carried out.

As described above, the evaluation value calculation unit 22 executes, at a certain point of time, an evaluation value calculation process using action result data relating to actions between users in the past accumulated till the point of time as a processing target. According to such a technique as just described, several problems appearing in such a technique as an Elo rating system in which exchange of a rate is carried out every time a competition is carried out can be avoided. For example, in an Elo rating system, it is known that, when three users having abilities equal to each other compete with other, an order effect that a difference appears in rating among the three users depending upon a competition order among them. Since this is a problem arising from that a rate is exchanged every time a competition is carried out, this does not occur in the evaluation value calculation process of the present embodiment in which an analysis is carried out using action result data after a competition is carried out by a plural number of times.

Further, in the Elo rating system, also a problem called local problem (island problem) occurs. As a particular example, it is assumed that a plurality of players belonging to a certain group A compete with each other and ratings corresponding to results of the competitions are given to the players while a plurality of players belonging to a different group B are given ratings on the basis of competition results in the group B similarly. If a player A1 belonging to the group A and a player B1 belonging to the group B compete with each other later, then in the Elo rating system, although a result of the competition is reflected on the ratings of the players A1 and B1 who competed directly with each other, the competition result is not reflected on the other players who belong to the groups A and B. Also this problem does not occur in the evaluation value calculation process of the present embodiment by which an analysis is carried out taking a directed graph which reflects all competition results of the players in the groups and the players between the groups as a target.

In the following, several modifications to the trace process are described. First, a modification to the selection criterion in the process of selecting a next target user indicated at S4 of FIG. 4 is described. In the foregoing description, where a plurality of winning users are candidates for a next target user, the evaluation value calculation unit 22 selects the users as a next target at probabilities equal to each other. However, the evaluation value calculation unit 22 may otherwise select a next target user in response to information of competition records indicative of in what manner each winning user has won the target user at present. In particular, a probability at which each winning user is to be selected is determined so that the movement to a winning user who is estimated to be stronger taking a winning percentage, a load difference and so forth into consideration exhibits a higher probability. Then, a next target user is determined by a random number on the basis of the determined probabilities. As a particular example, if the user B has won the user A at a rate of 7:1 (difference between points obtained and lost: 6) and the user C has won the user A at a rate of 2:1 (difference between points obtained and lost: 1), the user B is selected at a probability of 6/7 and the user C is selected at a probability of 1/7 as a next target user of the user A in accordance with the goal differences. Alternatively, paying attention only to the obtained points, the user B may be selected at a probability of 7/9 and the user C may be selected at a probability of 2/9. Alternatively, if the user B has three wins against the user A and the user C has two wins against the user A, then the user B is selected at a probability of 3/5 and the user C is selected at a probability of 2/5. If this method is applied, then where a plurality of users have won the user A, the random tracer can be hopped such that a user who is estimated to be relatively strong in relation to the user A from among a plurality of the users has a higher evaluation value.

Alternatively, the evaluation value calculation unit 22 may determine, in response to the number of victory or defeat, which user is to be selected as a next target user and whether or not the random tracer is to be actually moved to the next target user. As a particular example, it is assumed that the competition record of the user A against the user B is 2 wins and 4 losses (more wins than losses of the user B) and the competition record between the user A and the user C is 2 winds and 2 losses (even). In this case, the total match number 10 of the user A is determined as the denominator, and the random tracer hops to the user B at a probability of 4/10 in accordance with the number of wins of the user B but hops to the user C at a probability of 2/10 in accordance with the number of wins 2 of the user C. Further, the movement of the random tracer is ended at a probability of 4/10 corresponding to the total number of wins 4 of the user A without hopping to any user. In the present example, the competition record between the user A and the user C totally is a draw. However, since the user C is two wins against the user A, even a case in which the random tracer hops from the user A to the user C occurs. Further, although the user A suffers more losses than wins, since the user A has two wins to the user B, the random tracer may hop from the user B to the user A. It is to be noted that a similar process may be carried out taking not the numbers of wins and losses but the sum total of obtained points and lost points as a target.

Alternatively, the evaluation value calculation unit 22 may evaluate the reliability of a competition history and use the evaluation result to select a next movement destination of the random tracer. Even if the number of wins of the user B to the user A is greater than the number of wins of the user C to the user A, where the absolute specimen number is small, there is the possibility that such a competition result as described may have been obtained by chance, and the reliability is low in comparison with that in an alternative case in which the number of specimens is great. Therefore, in the case where it is selected to which movement destination the random tracer is to be moved in response to the number of wins, where the total number of wins is small, the probability is varied at random. As a particular example, where the user B has one win to the user A and the user C has two wins to the user A, since the ratio in number of wins between the user B and the user C is 1:2, according to the example described above, the random tracer selects the user B at a probability of 1/3 and selects the user C at a probability of 2/3. On the other hand, also where the user B has 50 wins to the user A and the user C has 100 wins to the user A, since the ratio in number of wins is 1:2 similarly, one of the users B and C is selected at an equal probability. However, in the former example, the total numbers of wins of the user B and the user C to the user A are small (three), and therefore, the possibility that the ratio in number of wins may reflect the abilities correctly is low (in other words, the reliability of the data of wins and losses is low) in comparison with the latter example. Therefore, the evaluation value calculation unit 22 varies the probability at random taking the reliability into consideration, and selects the user B at a probability of 1/3 + *α* and selects the user C at a probability of 2/3 - *α*. Here, *α* is a value determined at random in response to the reliability of the action result data, and can assume positive and negative values centered at 0. The evaluation value calculation unit 22 decreases the deflection width of *α* as the reliability of the action result data increases to raise the possibility that the value of *α* approaches 0. On the contrary, where the reliability is low, the evaluation value calculation unit 22 increases the deflection width of *α* to increase the possibility that the absolute value of *α* may become high. By this, where the reliability of data is low, a random element can be taken into account when a next target user is to be determined. Where a movement destination of the random tracer is selected taking not the number of wins but the difference between the numbers of wins and losses, the winning percentage or the like into consideration, since it is considered that, where the number of specimens of data is small, the reliability is low similarly, the value of *α* may be increased as the number of specimens of data decreases.

When the reliability is to be determined, also a factor other than the number of specimens of data may be taken into consideration. For example, where the number of persons who compete with the user A is greater, the reliability may be higher. Alternatively, as the user A has played a game more lately, the reliability may be higher, and after a longer period of time elapses after the user A played last, the reliability may be lower. Further, where there is such a deviation that the winning percentage of the user A is extremely high or low, there may be the possibility that the winning percentage may not originate from ordinary game plays but may be artificial. Therefore, in such a case as described above, a next target user may be determined deciding that the reliability is low.

Now, a modification to the point added to the evaluation value of a target user set as a movement determination of the random tracer by the process at S6 is described. In the foregoing description, the number of points to be added to the evaluation value by passage of the random tracer is always 1, and therefore, the evaluation value obtained finally coincides with the number of times of passage by the random tracer. However, the evaluation value calculation unit 22 may otherwise change the number of points to be added to the evaluation value of a user corresponding to a node depending upon which movement route is followed by the random tracer until the random tracer reaches the node.

For example, the evaluation value calculation unit 22 changes the number of points to be added to a user corresponding to a node in response to the number of times of hopping until the random tracer reaches the node. In particular, the evaluation value calculation unit 22 may set the number of points to be added at S6 to each user at which the random tracer arrives after it hops one or more times so as to be greater than the number of points to be added to the starting point user at S2. Further, the number of points to be added may be determined such that, as the number of times of hopping until a certain node is reached increases (namely, as the number of target users selected till then increases), the number of points to be added to the user corresponding to the node may increase.

Alternatively, the evaluation value calculation unit 22 may change the number of points to be added to a certain noted user in response to contents of an action (number of competitions or the like) of a user before the random tracer hops to the node of the noted user (namely, an action of the defeated user defeated by the noted user). In particular, where the total number of competitions of the defeated user is small, it is estimated that the user has just started the game, and there is the possibility that, even if the noted user wins such a user as just described, this may not prove that the noted user has higher ability. Therefore, if the random tracer hops from a defeat user whose number of competitions is smaller than a predetermined value to the node of the winning user, the number of points to be added may be reduced from that where the random tracer hops from the defeat user whose number of competitions is equal to or greater than the predetermined number.

Further, the evaluation value calculation unit 22 may vary the number of points to be added to the noted user in response to an attribute of action result data corresponding to an edge along which the random tracer hops to the node of the noted user. For example, in the case where the random tracer hops from the user A to the user B, the number of points to be added to the user B is changed in response to when the competition between the user A and the user B is carried out. Where the competition history of the two is of competitions old in time, there is the possibility that the competition history may not reflect the ability at present. Therefore, when the random tracer hops following an edge corresponding to competitions in the old time, the number of points to be added to the user after the hopping is reduced. By this, an analysis in which a comparatively new competition history is emphasized can be carried out. It is to be noted that the evaluation value calculation unit 22 may carry out an evaluation value calculation process ignoring a competition history in the past by more than a fixed interval. By this, for example, a ranking according to competition records in the latest one week or one month can be generated.

In the foregoing description, competition results included in action result data indicate results of one-to-one game competitions by two users. However, the evaluation value calculation unit 22 may otherwise use a competition result of a team competition as an evaluation target. For example, if a directed graph is created assuming that, when the team A to which the users A1 and A2 belong and the team B to which the users B1 and B2 belong compete against each other and the user A1 wins the users B1 and B2 and also the user A2 wins the users B1 and B2, then the strength of each user can be evaluated in a similar manner as in the case of individual competitions. In such a case, if the degree of contribution to the victory of each user who belongs to the winning team can be evaluated, then the movement destination of the random tracer may be selected in response to the degrees of contribution. As a particular example, in the case of such a game that the outcome of an entire team depends upon the cumulative of the scores acquired by the users belonging to the same team, to which one of a plurality of users belonging to the winning team the random tracer is to be hopped may be determined depending upon the scores acquired by the individual users. Alternatively, the probability at which each user is to be selected as a movement destination may be determined in accordance with a role of each user in team competitions. Further, while it is described in the foregoing description that an evaluation value is calculated in a unit of a user using a directed graph in which the user is regarded as a node, an evaluation value in a unit of a group may be calculated by carrying out an analysis of results of team competitions in which a user group (team) configured from a plurality of users is regarded as a node. In this case, the action result acquisition unit 21 acquires action result data indicative of results of actions (here, team competitions) carried out between user groups. Then, the evaluation value calculation unit 22 executes an evaluation value calculation process in which a user group is regarded as a node (evaluation unit) in place of a user described hereinabove and calculates evaluation values of each of the user groups.

Here, a particular example of information provided by the evaluation information providing unit 23 on the basis of evaluation values calculated by the evaluation value calculation unit 22. For example, the evaluation information providing unit 23 may sort all users with an evaluation value to carry out ranking of the users and provide rank information of each user. In this case, rankings within different periods may be calculated by determining a today's competition result, competition results in this month, and all competition results so far as a processing target. FIG. 5 depicts an example of a display screen displaying such ranking information of a certain user. Also a total rank, a this month's rank, and a today's rank are depicted in regard to the game A. Further, a rank of the user in a district (here, a rank in Japan and a rank in Tokyo) is displayed. Further, where the user belongs to a virtual district or team prepared in a game system, the evaluation information providing unit 23 may provide information of the rank in such a virtual district or team as just described. Further, where a plurality of kinds of games can be played in the information processing system 1, a total ranking of a plurality of games may be determined by calculating an evaluation value for each of the game types and calculating the total value of the evaluation values. Further, the evaluation information providing unit 23 may totalize evaluation values of users who belong to the same team or to the same district for each team or district to determine a ranking for each team or a ranking for each district. The evaluation information providing unit 23 may provide, to a requesting user who issues a providing request for information, not only ranking information of the requesting user itself but also ranking information of a user registered as a friend of the requesting user or a different user who has a high rank in various kinds of ranking.

Further, the evaluation information providing unit 23 may select a user (recommendable user) who becomes a candidate for an opponent with whom the requesting user is to carry out a game competition subsequently and provide information of the recommendable user to the requesting user in accordance with a request from the requesting user. Further, in this case, the evaluation information providing unit 23 may provide information relating to actions carried out in the past between the recommendable user and the requesting user to the requesting user. As a particular example, the evaluation information providing unit 23 selects a user whose evaluation value is proximate to that of the requesting user as a recommendable user. Alternatively, the evaluation information providing unit 23 may select a user whose evaluation value is higher than that of the requesting user (namely, a user whose ability is higher than that of the requesting user) or a user whose evaluation value is lower as a recommendable user. FIG. 6 depicts a display example of such recommendable users (opponent candidates) and depicts evaluation values of the recommendable users as scores in an associated relationship with user names of the recommendable users. Further, also history information representative of whether or not a competition was carried out in the past between the recommendable users and the requesting user is displayed. The requesting user can refer to the scores to select an opponent of the game taking the ability of the opponent into consideration.

The embodiment of the present invention is not limited to that described above. For example, while, in the embodiment described above, the game server 4 carries out processing of a game, each user terminal 3 may execute processing of a game such that, upon game competition, the user terminal 3 directly exchange data to and from the user terminal 3 of the opponent.

Further, in the foregoing description, the evaluation value calculation unit 22 selects a user who wins a target user during execution of a trace process as a next target user. However, not only a winning user, but also a user whose competition result with the target user is a draw may be made selectable as a new target user. Further, the evaluation value calculation unit 22 may not select a winning user but select a user defeated by the target user as a new target user. In this case, a user having a competition result by being defected by other users is provided with a higher evaluation value. Therefore, ranking of users can be obtained by sorting the users in the ascending order of the evaluation value obtained by the evaluation value calculation process.

Further, the processing target to be determined by the totalization server 2 in the embodiment of the present invention is not limited to action result data representative of competition results of a game, and the management server 2 may determine data relating to results of actions carried out between various users as a processing target. As a particular example, each user may input information of evaluation of an opponent when a game completion is carried out, and the totalization server 2 may analyze action result data indicative of contents of evaluation obtained by such information inputting to calculate an evaluation value indicative of in what manner each user is evaluated by an opponent or opponents. In this example, the game server 4 acquires and accumulates information indicative of evaluation of an opponent from each user when game competitions are carried out. Then, the game server 4 provides action result data indicative of contents of such evaluation to the totalization server 2 separately from action result data indicative of competition results. This evaluation may relate to whether the play of the opponent is good, whether the opponent is fair, or whether the opponent is preferable as an opponent, and may not necessarily relate to the ability of the game. For example, when the user A takes action to positively evaluate the user B, a directed graph having an edge from the user A representing such an action result toward the user B can be created. The evaluation value calculation unit 22 carries out, for the directed graph, a trace process similar to that in the case of competition results. In particular, where the user A evaluates the users B and C and is selected as a target user at present, the evaluation value calculation unit 22 selects one of the users B and C as a next target user, hops the random tracer to the node of the selected user and adds a point to the evaluation value of the node. By carrying out such an analysis as just described, the evaluation value calculation unit 22 can calculate an evaluation value of each user such that a user who is evaluated by a greater number of users has a higher evaluation value and a user who is evaluated by a user evaluated high has a higher evaluation value.

In the example described above, when contents of evaluation carried out by a user are indicated by multi stages, the evaluation value calculation unit 22 may select a movement destination of the random tracer at such a probability that a user who receives a higher evaluation is more liable to be selected by using the evaluation contents similarly as a score of a game. Further, when a certain user carries out a competition with a particular user by a plural number of times, evaluation may possibly be carried out every time a competition is carried out. In such a case, a movement destination of the random tracer may be selected at such a probability that a user who is evaluated by a greater number of times is more liable to be selected making use of the number of times of evaluation similarly as the outcome of a competition.

Further, also in a social networking service and so forth, it is performed by each user to comment in regard to remarks of other users or to operate a button to indicate some positive or negative evaluation with regard to remarks of other users. Therefore, also evaluation actions carried out between such users can be determined as an evaluation target similarly as in the evaluation of game competitions described hereinabove.

### [Reference Signs List]

1 Information processing system, 2 Totalization server, 3 User terminal, 4 Game server, 11 Control unit, 12 Storage unit, 13 Communication unit, 21 Action result acquisition unit, 22 Evaluation value calculation unit, 23 Evaluation information providing unit.

## Claims

1. An information processing apparatus (2) comprising:
an action result acquisition unit (21) configured to acquire, regarding a plurality of users or user groups, action result data indicative of a result of a competition executed in the past between the plurality of users or user groups, wherein the competition is a game competition played through user terminals (3); and
an evaluation value calculation unit (22) configured to create a directed graph indicating a user or a user group as a node and a competition as an edge, and
to set an execution time number N in dependence from the total number of users or user groups, a desired accuracy and a processing load,
to execute a trace process over the directed graph representing the action result data by the plural number of execution times N and calculate a normalized evaluation value of each of the users or user groups in response to a number of times by which the node of the directed graph representing the user or user group is selected as a target in the plural number of times of the trace process, wherein the number of times is divided by the execution time number N, the trace process including
a starting point selection process randomly selecting a node representing a user or a user group as a target of the trace process from among the plurality of nodes representing users or user groups on the directed graph, and
a target selection process repetitively performing a process of newly selecting, as a next target, a node representing an opponent user or opponent user group who has been a winning opponent in the competition carried out by the user or user group represented by the node selected as the target at present on a basis of the directed graph representing the action result data until a predetermined condition is satisfied.

2. The information processing apparatus (2) according to claim 1,
wherein, where a plurality of opponent users or opponent user groups have been opponents of actions carried out by the target at present in the target selection process, the evaluation value calculation unit (22) randomly selects the next target from among the plurality of opponent users or opponent user groups of the directed graph.

3. The information processing apparatus (2) according to claim 2,
wherein, in the target selection process, the evaluation value calculation unit (22) randomly selects the next target at a probability determined in response to contents of the action result data regarding actions carried out between each of the plurality of opponent users or opponent user groups and the target at present.

4. The information processing apparatus (2) according to claim 3,
wherein, in the target selection process, the evaluation value calculation unit (22) evaluates reliability on contents of the action based on a number of specimens of action result data and randomly varies the probability in response to the reliability and then selects the next target in response to the varied probability.

5. The information processing apparatus (2) according to claim 1,
wherein, every time each of the plurality of users or user groups is selected as a target in the trace process, the evaluation value calculation unit (22) adds a point to the evaluation value of the user or user group to calculate an evaluation value of each of the plurality of users or user groups.

6. The information processing apparatus (2) according to claim 5,
wherein, where each of the plurality of users or user groups is selected as a target, the evaluation value calculation unit (22) adds a greater number of points to the evaluation value of the user or user group as number of targets selected in the target selection process so far increases.

7. The information processing apparatus (2) according to claim 5,
wherein, when each of the plurality of users or user groups is selected as a new target, the evaluation value calculation unit (22) adds a number of points determined in response to action result data regarding an action carried out between a preceding target to the new target and the new target to an evaluation value of the user or user group selected as the new target.

8. The information processing apparatus (2) according to claim 1, further comprising:
an information providing unit (23) configured to select, regarding a requesting user or a requesting user group from among the plurality of users or user groups, a recommendable user or a recommendable user group recommendable as a next opponent of an action of the requesting user or requesting user group using the evaluation values calculated relating to the plurality of users or user groups and provide information of the selected recommendable user or recommendable user group to the requesting user or a user who belongs to the requesting user group.

9. The information processing apparatus (2) according to claim 8,
wherein, regarding the selected recommendable user or recommendable user group, the information providing unit (23) provides information relating to actions in the past carried out between the recommendable user or recommendable user group and the requesting user or requesting user group to the requesting user or a user who belongs to the requesting user group together with information of the recommendable user or recommendable user group.

10. An information processing method comprising:
a step of acquiring, regarding a plurality of users or user groups, action result data indicating results of competitions carried out in the past between the plurality of users or user groups, wherein the competition is a game competition played through user terminals (3); and
a step of creating a directed graph indicating a user or a user group as a node and a competition as an edge;
a step of setting an execution time number N in dependence from the total number of users or user groups, a desired accuracy and a processing load,
a step of executing a trace process over the directed graph representing the action result data by the plural number of execution times N and calculating a normalized evaluation value of each of the users or user groups in response to a number of times by which the node of the directed graph representing the user or user group is selected as a target in the plural number of times of the trace process, wherein the number of times is divided by the execution time number N, the trace process including
a starting point selection process randomly selecting a node representing a user or a user group as a target of the trace process from among the plurality of nodes representing users or user groups on the directed graph, and
a target selection process repetitively performing a process newly selecting, as a next target, a node representing an opponent user or opponent user group who has been a winning opponent in the competition carried out by the user or user group represented by the node selected as the target at present on a basis of the directed graph representing the action result data until a predetermined condition is satisfied.

11. A program for causing a computer (2) to function as:
an action result acquisition unit (21) configured to acquire, regarding a plurality of users or user groups, action result data indicative of a result of a competition executed in the past between the plurality of users or user groups, wherein the competition is a game competition played through user terminals (3); and
an evaluation value calculation unit (22) configured to create a directed graph indicating a user or a user group as a node and a competition as an edge, to set an execution time number N in dependence from the total number of users or user groups, a desired accuracy and a processing load, and to execute a trace process over the directed graph representing the action result data by the plural number of execution times N and calculate a normalized evaluation value of each of the users or user groups in response to a number of times by which the node of the directed graph representing the user or user group is selected as a target in the plural number of times of the trace process, wherein the number of times is divided by the execution time number N, the trace process including
a starting point selection process randomly selecting a node representing a user or a user group as a target of the trace process from among the plurality of nodes representing users or user groups on the directed graph, and
a target selection process repetitively performing a process newly selecting, as a next target, a node representing an opponent user or opponent user group who has been a winning opponent in the competition carried out by the user or user group represented by the node selected as the target at present on a basis of the directed graph representing the action result data until a predetermined condition is satisfied.

12. A computer-readable information recording medium in which a program is stored, the program for causing a computer (22) to function as:
an action result acquisition unit (21) configured to acquire, regarding a plurality of users or user groups, action result data indicative of a result of a competition executed in the past between the plurality of users or user groups, wherein the competition is a game competition played through user terminals (3); and
an evaluation value calculation unit (22) configured to create a directed graph indicating a user or a user group as a node and a competition as an edge, to set an execution time number N in dependence from the total number of users or user groups, a desired accuracy and a processing load, and to execute a trace process over the directed graph representing the action result data by the plural number of execution times N and calculate a normalized evaluation value of each of the users or user groups in response to a number of times by which the node of the directed graph representing the user or user group is selected as a target in the plural number of times of the trace process, wherein the number of times is divided by the execution time number N, the trace process including
a starting point selection process randomly selecting a node representing a user or a user group as a target of the trace process from among the plurality of nodes representing users or user groups on the directed graph, and
a target selection process repetitively performing a process newly selecting, as a next target, a node representing an opponent user or opponent user group who has been a winning opponent in the competition carried out by the user or user group represented by the node selected as the target at present on a basis of the directed graph representing the action result data until a predetermined condition is satisfied.

## Patentansprüche

1. Informationsverarbeitungsvorrichtung (2), umfassend:
eine Aktionsergebniserfassungseinheit (21), die, in Bezug auf mehrere Benutzer oder Benutzergruppen, zum Erfassen von Aktionsergebnisdaten ausgelegt ist, die ein Ergebnis eines in der Vergangenheit zwischen den mehreren Benutzern oder Benutzergruppen ausgeführten Wettbewerbs anzeigen, wobei der Wettbewerb ein über Benutzerendgeräte (3) gespielter Spielwettbewerb ist; und
eine Berechnungseinheit (22) für den Bewertungswert, die zum Erstellen eines gerichteten Graphs ausgelegt ist, der einen Benutzer oder eine Benutzergruppe als Knoten und einen Wettbewerb als Kante anzeigt, und zum Einstellen einer Ausführungszeitzahl N in Abhängigkeit von der Gesamtzahl der Benutzer oder Benutzergruppen, einer gewünschten Genauigkeit und einer Verarbeitungslast,
zum Ausführen eines Ablaufverfolgungsprozesses über dem gerichteten Graphen, der die Aktionsergebnisdaten durch die Pluralanzahl der Ausführungszeiten N darstellt, und einen normierten Bewertungswert eines jeden Benutzers oder jeder Benutzergruppe als Reaktion auf eine Anzahl von Zeiten zu berechnen, durch die der Knoten des gerichteten Graphen, der den Benutzer oder die Benutzergruppe darstellt, als Ziel in der Pluralanzahl der Zeiten des Ablaufverfolgungsprozesses ausgewählt wird, wobei die Anzahl von Zeiten durch die Ausführungszeitzahl N geteilt wird, wobei der Ablaufverfolgungsprozess beinhaltet
einen Startpunkt-Auswahlprozess, bei dem ein Knoten, der einen Benutzer oder eine Benutzergruppe darstellt, zufällig als Ziel des Ablaufverfolgungsprozesses aus den mehreren Knoten ausgewählt wird, die Benutzer oder Benutzergruppen auf dem gerichteten Graphen darstellen, und
einen Zielauswahlprozess, der wiederholt einen Prozess der Neuauswahl eines Knotens als nächstes Ziel durchführt, der einen gegnerischen Benutzer oder eine gegnerische Benutzergruppe repräsentiert, der ein siegreicher Gegner in dem Wettbewerb war, der von dem Benutzer oder der Benutzergruppe durchgeführt wird, die durch den Knoten repräsentiert wird, der derzeit als Ziel ausgewählt ist, auf der Grundlage des gerichteten Graphen, der die Aktionsergebnisdaten darstellt, bis eine vorbestimmte Bedingung erfüllt ist.

2. Informationsverarbeitungsvorrichtung (2) nach Anspruch 1,
wobei, wenn mehrere gegnerische Benutzer oder gegnerische Benutzergruppen Gegner von Aktionen waren, die von dem Ziel derzeit im Zielauswahlprozess durchgeführt werden, die Berechnungseinheit (22) des Bewertungswerts zufällig das nächste Ziel aus den mehreren gegnerischen Benutzern oder gegnerischen Benutzergruppen des gerichteten Graphen auswählt.

3. Informationsverarbeitungsvorrichtung (2) nach Anspruch 2,
wobei die Berechnungseinheit (22) des Bewertungswertes im Zielauswahlprozess das nächste Ziel zufällig mit einer Wahrscheinlichkeit auswählt, die als Reaktion auf den Inhalt der Aktionsergebnisdaten bezüglich Aktionen bestimmt wird, die zwischen jedem der mehreren gegnerischen Benutzer oder gegnerischen Benutzergruppen und dem aktuellen Ziel durchgeführt werden.

4. Informationsverarbeitungsvorrichtung (2) nach Anspruch 3,
wobei die Berechnungseinheit (22) des Bewertungswertes im Zielauswahlprozess die Zuverlässigkeit des Inhalts der Aktion basierend auf einer Anzahl von Proben von Aktionsergebnissen bewertet, und die Wahrscheinlichkeit als Reaktion auf die Zuverlässigkeit zufällig variiert und dann das nächste Ziel als Reaktion auf die variierte Wahrscheinlichkeit auswählt.

5. Informationsverarbeitungsvorrichtung (2) nach Anspruch 1,
wobei jedes Mal, wenn jeder der mehreren Benutzer oder Benutzergruppen als Ziel im Ablaufprozess ausgewählt wird, die Berechnungseinheit (22) des Bewertungswertes des Benutzers oder der Benutzergruppe einen Punkt hinzufügt, um einen Bewertungswert jedes der mehreren Benutzer oder Benutzergruppen zu berechnen.

6. Informationsverarbeitungsvorrichtung (2) nach Anspruch 5,
wobei, wenn jeder der mehreren Benutzer oder Benutzergruppen als Ziel ausgewählt ist, die Berechnungseinheit (22) für den Bewertungswert des Benutzers oder der Benutzergruppe eine größere Anzahl von Punkten hinzufügt, wenn die Anzahl der Ziele, die in dem Zielauswahlprozess ausgewählt wurden, so weit zunimmt.

7. Informationsverarbeitungsvorrichtung (2) nach Anspruch 5,
wobei, wenn jeder der mehreren Benutzer oder Benutzergruppen als neues Ziel ausgewählt wird, die Berechnungseinheit (22) für den Bewertungswert eine Anzahl von Punkten hinzufügt, die als Reaktion auf Aktionsergebnisdaten bezüglich einer Aktion, die zwischen einem vorhergehenden Ziel zu dem neuen Ziel durchgeführt wird, bestimmt wurden, und dem neuen Ziel zu einem Bewertungswert des Benutzers oder der Benutzergruppe, die als neues Ziel ausgewählt wurde.

8. Informationsverarbeitungsvorrichtung (2) nach Anspruch 1, ferner umfassend:
eine Informationsbereitstellungseinheit (23), die, in Bezug auf einen anfordernden Benutzer oder eine anfordernde Benutzergruppe, zum Auswählen eines empfehlenswerten Benutzers oder einer empfehlenswerten Benutzergruppe ausgelegt ist, die als nächster Gegner einer Aktion des anfordernden Benutzers oder der anfordernden Benutzergruppe empfehlenswert ist, unter Verwendung der Bewertungswerte, die in Bezug auf die mehreren Benutzer oder Benutzergruppen berechnet wurden, und Informationen des ausgewählten empfehlenswerten Benutzers oder der ausgewählten empfehlenswerten Benutzergruppe an den anfordernden Benutzer oder einen Benutzer, der zu der anfordernden Benutzergruppe gehört, bereitstellen.

9. Informationsverarbeitungsvorrichtung (2) nach Anspruch 8,
wobei in Bezug auf den ausgewählten empfehlenswerten Benutzer oder die empfehlenswerte Benutzergruppe die Informationsbereitstellungseinheit (23) Informationen über Aktionen in der Vergangenheit bereitstellt, die zwischen dem empfehlenswerten Benutzer oder der empfehlenswerten Benutzergruppe und dem anfordernden Benutzer oder der anfordernden Benutzergruppe an den anfordernden Benutzer oder einen Benutzer, der zur anfordernden Benutzergruppe gehört, durchgeführt wurden, zusammen mit Informationen des empfehlenswerten Benutzers oder der empfehlenswerten Benutzergruppe.

10. Informationsverarbeitungsverfahren, umfassend:
einen Schritt, in Bezug auf mehrere Benutzer oder Benutzergruppen, zum Erfassen von Aktionsergebnisdaten, die Ergebnisse von in der Vergangenheit zwischen den mehreren Benutzern oder Benutzergruppen durchgeführten Wettbewerben anzeigen, wobei der Wettbewerb ein über Benutzerendgeräte (3) gespielter Spielwettbewerb ist; und
einen Schritt zum Erstellen eines gerichteten Graphen, der einen Benutzer oder eine Benutzergruppe als Knoten und einen Wettbewerb als Kante anzeigt;
einen Schritt zum Einstellen einer Ausführungszeitzahl N in Abhängigkeit von der Gesamtzahl der Benutzer oder Benutzergruppen, einer gewünschten Genauigkeit und einer Verarbeitungslast,
einen Schritt zum Ausführen eines Ablaufverfolgungsvorgangs über den gerichteten Graphen, der die Aktionsergebnisdaten durch die Pluralanzahl der Ausführungszeiten N darstellt, und zum Berechnen eines normierten Bewertungswerts jeder der Benutzer oder Benutzergruppen als Reaktion auf eine Anzahl von Zeiten, durch die der Knoten des gerichteten Graphen, der den Benutzer oder die Benutzergruppe darstellt, als Ziel in der Pluralanzahl der Ablaufverfolgungsvorgänge ausgewählt wird, wobei die Anzahl von Zeiten durch die Ausführungszeitnummer N dividiert wird, wobei der Ablaufverfolgungsprozess beinhaltet
einen Startpunkt-Auswahlprozess, bei dem ein Knoten, der einen Benutzer oder eine Benutzergruppe darstellt, zufällig als Ziel des Ablaufverfolgungsprozesses aus den mehreren Knoten ausgewählt wird, die Benutzer oder Benutzergruppen auf dem gerichteten Graphen darstellen, und
einen Zielauswahlprozess, der wiederholt einen Prozess durchführt, der als nächstes Ziel einen Knoten auswählt, der einen gegnerischen Benutzer oder eine gegnerische Benutzergruppe darstellt, der ein siegreicher Gegner in dem Wettbewerb war, der von dem Benutzer oder der Benutzergruppe durchgeführt wird, die durch den Knoten repräsentiert wird, die derzeit als Ziel ausgewählt wird, auf der Grundlage des gerichteten Graphen, der die Aktionsergebnisdaten darstellt, bis eine vorbestimmte Bedingung erfüllt ist.

11. Ein Programm, um einen Computer (2) zu veranlassen, in Bezug auf mehrere Benutzer oder Benutzergruppen, als
eine Aktionsergebniserfassungseinheit (21) zu fungieren, die zum Erfassen von Aktionsergebnisdaten ausgelegt ist, die ein Ergebnis eines in der Vergangenheit zwischen den mehreren Benutzern oder Benutzergruppen ausgeführten Wettbewerbs anzeigen, wobei der Wettbewerb ein über Benutzerendgeräte (3) gespielter Spielwettbewerb ist; und
eine Berechnungseinheit (22) für den Bewertungswert, die zum Erstellen eines gerichteten Graphen ausgelegt ist, der einen Benutzer oder eine Benutzergruppe als Knoten und einen Wettbewerb als Kante anzeigt, um eine Ausführungszeitzahl N in Abhängigkeit von der Gesamtzahl der Benutzer oder Benutzergruppen, einer gewünschten Genauigkeit und einer Verarbeitungslast festzulegen, und einen Ablaufverfolgungsprozess über dem gerichteten Graphen auszuführen, der die Aktionsergebnisdaten durch die Pluralanzahl der Ausführungszeiten N darstellt, und einen normierten Bewertungswert jeder der Benutzer oder Benutzergruppen als Reaktion auf eine Anzahl von Zeiten zu berechnen,
durch die der Knoten des gerichteten Graphen, der den Benutzer oder die Benutzergruppe darstellt, als Ziel in der Pluralanzahl der Zeiten des Ablaufverfahrens ausgewählt wird, wobei die Anzahl von Zeiten durch die Ausführungszeitzahl N dividiert wird, wobei der Ablaufverfolgungsprozess beinhaltet
einen Startpunkt-Auswahlprozess, bei dem ein Knoten, der einen Benutzer oder eine Benutzergruppe darstellt, zufällig als Ziel des Ablaufverfolgungsprozesses aus den mehreren Knoten ausgewählt wird, die Benutzer oder Benutzergruppen auf dem gerichteten Graphen darstellen, und
einen Zielauswahlprozess, der wiederholt einen Prozess durchführt, der als nächstes Ziel einen Knoten auswählt, der einen gegnerischen Benutzer oder eine gegnerische Benutzergruppe darstellt, der ein siegreicher Gegner in dem Wettbewerb war, der von dem Benutzer oder der Benutzergruppe durchgeführt wird, die durch den Knoten repräsentiert wird, der derzeit als Ziel ausgewählt ist, auf der Grundlage des gerichteten Graphen, der die Aktionsergebnisdaten darstellt, bis eine vorbestimmte Bedingung erfüllt ist.

12. Computerlesbares Informationsaufzeichnungsmedium, in dem ein Programm gespeichert ist, wobei das Programm, in Bezug auf mehrere Benutzer oder Benutzergruppen, einen Computer (2) veranlass als eine Aktionsergebniserfassungseinheit (21) zu fungieren, die zum Erfassen von Aktionsergebnisdaten ausgelegt ist, die ein Ergebnis eines in der Vergangenheit zwischen den mehreren Benutzern oder Benutzergruppen ausgeführten Wettbewerbs anzeigen, wobei der Wettbewerb ein über Benutzerendgeräte (3) gespielter Spielwettbewerb ist; und
eine Berechnungseinheit (22) für den Bewertungswert, die zum Erstellen eines gerichteten Graphen ausgelegt ist, der einen Benutzer oder eine Benutzergruppe als Knoten und einen Wettbewerb als Kante anzeigt, um eine Ausführungszeitzahl N in Abhängigkeit von der Gesamtzahl der Benutzer oder Benutzergruppen, einer gewünschten Genauigkeit und einer Verarbeitungslast festzulegen, und einen Ablaufverfolgungsprozess über dem gerichteten Graphen auszuführen, der die Aktionsergebnisdaten durch die Pluralanzahl der Ausführungszeiten N darstellt, und einen normierten Bewertungswert jeder der Benutzer oder Benutzergruppen als Reaktion auf eine Anzahl von Zeiten zu berechnen, durch die der Knoten des gerichteten Graphen, der den Benutzer oder die Benutzergruppe darstellt, als Ziel in der Pluralanzahl der Zeiten des Ablaufverfahrens ausgewählt wird, wobei die Anzahl von Zeiten durch die Ausführungszeitnummer N dividiert wird, wobei der Ablaufverfolgungsprozess beinhaltet
einen Startpunkt-Auswahlprozess, bei dem ein Knoten, der einen Benutzer oder eine Benutzergruppe darstellt, zufällig als Ziel des Ablaufverfolgungsprozesses aus den mehreren Knoten ausgewählt wird, die Benutzer oder Benutzergruppen auf dem gerichteten Graphen darstellen, und
einen Zielauswahlprozess, der wiederholt einen Prozess durchführt, der als nächstes Ziel einen Knoten auswählt, der einen gegnerischen Benutzer oder eine gegnerische Benutzergruppe darstellt, der ein siegreicher Gegner in dem Wettbewerb war, der von dem Benutzer oder der Benutzergruppe durchgeführt wird, die durch den Knoten repräsentiert wird, der derzeit als Ziel ausgewählt ist, auf der Grundlage des gerichteten Graphen, der die Aktionsergebnisdaten darstellt, bis eine vorbestimmte Bedingung erfüllt ist.

## Revendications

1. Appareil de traitement d'informations (2) comprenant :
une unité d'acquisition de résultat d'action (21) configurée pour acquérir, en ce qui concerne une pluralité d'utilisateurs ou de groupes d'utilisateurs, des données de résultat d'action indiquant un résultat d'une compétition exécutée dans le passé entre la pluralité d'utilisateurs ou de groupes d'utilisateurs, dans lequel la compétition est une compétition de jeu jouée au moyen de terminaux d'utilisateur (3) ; et
une unité de calcul de valeur d'évaluation (22) configurée pour créer un graphe dirigé montrant un utilisateur ou un groupe d'utilisateurs sous la forme d'un noeud et une compétition sous la forme d'un bord, et
pour définir un nombre N de fois d'exécution en fonction du nombre total d'utilisateurs ou de groupes d'utilisateurs, une précision souhaitée et une charge de traitement,
pour exécuter un processus de traçage sur le graphe dirigé représentant les données de résultat d'action par les multiples N nombres de fois d'exécution et pour calculer une valeur d'évaluation normalisée de chaque utilisateur ou de chaque groupe d'utilisateurs à la suite d'un nombre de fois au moyen duquel le noeud du graphe dirigé représentant l'utilisateur ou le groupe d'utilisateurs est sélectionné en tant que cible dans les multiples nombres de fois du processus de traçage, dans lequel le nombre de fois est divisé par le nombre N de fois d'exécution, le processus de traçage comprenant
un processus de sélection de point de départ sélectionnant de manière aléatoire un noeud représentant un utilisateur ou un groupe d'utilisateurs en tant que cible du processus de traçage parmi la pluralité de noeuds représentant des utilisateurs ou des groupes d'utilisateurs sur le graphe dirigé, et
un processus de sélection de cible effectuant de manière répétitive un processus consistant à sélectionner récemment, en tant que prochaine cible, un noeud représentant un utilisateur concurrent ou un groupe d'utilisateurs concurrents qui a été un concurrent gagnant lors de la compétition réalisée par l'utilisateur ou le groupe d'utilisateurs représenté par le noeud sélectionné en tant que cible à présent sur la base du graphe dirigé représentant les données de résultat d'action jusqu'à ce qu'une condition prédéterminée soit remplie.

2. Appareil de traitement d'informations (2) selon la revendication 1,
dans lequel, lorsqu'une pluralité d'utilisateurs concurrents ou de groupes d'utilisateurs concurrents ont été des concurrents d'actions réalisées par la cible à présent dans le processus de sélection de cible, l'unité de calcul de valeur d'évaluation (22) sélectionne de manière aléatoire la prochaine cible parmi la pluralité d'utilisateurs concurrents ou de groupes d'utilisateurs concurrents du graphe dirigé.

3. Appareil de traitement d'informations (2) selon la revendication 2,
dans lequel, dans le processus de sélection de cible, l'unité de calcul de valeur d'évaluation (22) sélectionne de manière aléatoire la prochaine cible selon une probabilité déterminée en réponse à des contenus des données de résultat d'action concernant des actions réalisées entre chaque utilisateur concurrent de la pluralité d'utilisateurs concurrents ou chaque groupe d'utilisateurs concurrents de la pluralité de groupes d'utilisateurs concurrents et la cible à présent.

4. Appareil de traitement d'informations (2) selon la revendication 3,
dans lequel, dans le processus de sélection de cible, l'unité de calcul de valeur d'évaluation (22) évalue la fiabilité de contenus de l'action en se basant sur un nombre de spécimens de données de résultat d'action et modifie de manière aléatoire la probabilité en réponse à la fiabilité et, ensuite, sélectionne la prochaine cible en réponse à la probabilité modifiée.

5. Appareil de traitement d'informations (2) selon la revendication 1,
dans lequel, chaque fois que chaque utilisateur de la pluralité d'utilisateurs ou que chaque groupe d'utilisateurs de la pluralité de groupes d'utilisateurs est sélectionné en tant que cible dans le processus de traçage, l'unité de calcul de valeur d'évaluation (22) ajoute un point à la valeur d'évaluation de l'utilisateur ou du groupe d'utilisateurs pour calculer une valeur d'évaluation de chaque utilisateur de la pluralité d'utilisateurs ou de chaque groupe d'utilisateurs de la pluralité de groupes d'utilisateurs.

6. Appareil de traitement d'informations (2) selon la revendication 5,
dans lequel, lorsque chaque utilisateur de la pluralité d'utilisateurs ou chaque groupe d'utilisateurs de la pluralité de groupes d'utilisateurs est sélectionné en tant que cible, l'unité de calcul de valeur d'évaluation (22) ajoute un nombre plus important de points à la valeur d'évaluation de l'utilisateur ou du groupe d'utilisateurs au fur et à mesure que le nombre de cibles sélectionnées dans le processus de sélection de cible jusqu'à présent augmente.

7. Appareil de traitement d'informations (2) selon la revendication 5,
dans lequel, lorsque chaque utilisateur de la pluralité d'utilisateurs ou chaque groupe d'utilisateurs de la pluralité de groupes d'utilisateurs est sélectionné en tant que nouvelle cible, l'unité de calcul de valeur d'évaluation (22) ajoute un certain nombre de points déterminé en réponse à des données de résultat d'action concernant une action réalisée entre une cible précédant à la nouvelle cible et la nouvelle cible à une valeur d'évaluation de l'utilisateur ou du groupe d'utilisateurs sélectionné en tant que nouvelle cible.

8. Appareil de traitement d'informations (2) selon la revendication 1, comprenant en outre :
une unité de fourniture d'informations (23) configurée pour sélectionner, en ce qui concerne un utilisateur demandeur ou un groupe d'utilisateurs demandeurs parmi la pluralité d'utilisateurs ou de groupes d'utilisateurs, un utilisateur recommandable ou un groupe d'utilisateurs recommandables qui peut être recommandé en tant que prochain concurrent d'une action de l'utilisateur demandeur ou du groupe d'utilisateurs demandeurs à l'aide des valeurs d'évaluation calculées se rapportant à la pluralité d'utilisateurs ou de groupes d'utilisateurs et pour fournir des informations de l'utilisateur recommandable sélectionné ou du groupe d'utilisateurs recommandables sélectionné à l'utilisateur demandeur ou à un utilisateur qui appartient au groupe d'utilisateurs demandeurs.

9. Appareil de traitement d'informations (2) selon la revendication 8,
dans lequel, en ce qui concerne l'utilisateur recommandable sélectionné ou le groupe d'utilisateurs recommandables sélectionné, l'unité de fourniture d'informations (23) fournit des informations se rapportant à des actions réalisées dans le passé entre l'utilisateur recommandable ou un groupe d'utilisateurs recommandables et l'utilisateur demandeur ou le groupe d'utilisateurs demandeurs à l'utilisateur demandeur ou à un utilisateur qui appartient au groupe d'utilisateurs demandeurs, conjointement avec des informations de l'utilisateur recommandable ou du groupe d'utilisateurs recommandables.

10. Procédé de traitement d'informations comprenant :
une étape consistant à acquérir, en ce qui concerne une pluralité d'utilisateurs ou de groupes d'utilisateurs, des données de résultat d'action indiquant des résultats de compétitions réalisées dans le passé entre la pluralité d'utilisateurs ou de groupes d'utilisateurs, dans lequel la compétition est une compétition de jeu jouée au moyen de terminaux d'utilisateur (3) ; et
une étape consistant à créer un graphe dirigé montrant un utilisateur ou un groupe d'utilisateurs sous la forme d'un noeud et une compétition sous la forme d'un bord ;
une étape consistant à définir un nombre N de fois d'exécution en fonction du nombre total d'utilisateurs ou de groupes d'utilisateurs, une précision souhaitée et une charge de traitement,
une étape consistant à exécuter un processus de traçage sur le graphe dirigé représentant les données de résultat d'action par les multiples N nombres de fois d'exécution et à calculer une valeur d'évaluation normalisée de chaque utilisateur ou de chaque groupe d'utilisateurs à la suite d'un nombre de fois au moyen duquel le noeud du graphe dirigé représentant l'utilisateur ou le groupe d'utilisateurs est sélectionné en tant que cible dans les multiples nombres de fois du processus de traçage, dans lequel le nombre de fois est divisé par le nombre N de fois d'exécution, le processus de traçage comprenant
un processus de sélection de point de départ sélectionnant de manière aléatoire un noeud représentant un utilisateur ou un groupe d'utilisateurs en tant que cible du processus de traçage parmi la pluralité de noeuds représentant des utilisateurs ou des groupes d'utilisateurs sur le graphe dirigé, et
un processus de sélection de cible effectuant de manière répétitive un processus sélectionnant récemment, en tant que prochaine cible, un noeud représentant un utilisateur concurrent ou un groupe d'utilisateurs concurrents qui a été un concurrent gagnant lors de la compétition réalisée par l'utilisateur ou le groupe d'utilisateurs représenté par le noeud sélectionné en tant que cible à présent sur la base du graphe dirigé représentant les données de résultat d'action jusqu'à ce qu'une condition prédéterminée soit remplie.

11. Programme pour contraindre un ordinateur (2) à fonctionner comme :
une unité d'acquisition de résultat d'action (21) configurée pour acquérir, en ce qui concerne une pluralité d'utilisateurs ou de groupes d'utilisateurs, des données de résultat d'action indiquant un résultat d'une compétition exécutée dans le passé entre la pluralité d'utilisateurs ou de groupes d'utilisateurs, dans lequel la compétition est une compétition de jeu jouée au moyen de terminaux d'utilisateur (3) ; et
une unité de calcul de valeur d'évaluation (22) configurée pour créer un graphe dirigé montrant un utilisateur ou un groupe d'utilisateurs sous la forme d'un noeud et une compétition sous la forme d'un bord, pour définir un nombre N de fois d'exécution en fonction du nombre total d'utilisateurs ou de groupes d'utilisateurs, une précision souhaitée et une charge de traitement, et pour exécuter un processus de traçage sur le graphe dirigé représentant les données de résultat d'action par les multiples N nombres de fois d'exécution et pour calculer une valeur d'évaluation normalisée de chaque utilisateur ou de chaque groupe d'utilisateurs à la suite d'un nombre de fois au moyen duquel le noeud du graphe dirigé représentant l'utilisateur ou le groupe d'utilisateurs est sélectionné en tant que cible dans les multiples nombres de fois du processus de traçage, dans lequel le nombre de fois est divisé par le nombre N de fois d'exécution, le processus de traçage comprenant
un processus de sélection de point de départ sélectionnant de manière aléatoire un noeud représentant un utilisateur ou un groupe d'utilisateurs en tant que cible du processus de traçage parmi la pluralité de noeuds représentant des utilisateurs ou des groupes d'utilisateurs sur le graphe dirigé, et
un processus de sélection de cible effectuant de manière répétitive un processus sélectionnant récemment, en tant que prochaine cible, un noeud représentant un utilisateur concurrent ou un groupe d'utilisateurs concurrents qui a été un concurrent gagnant lors de la compétition réalisée par l'utilisateur ou le groupe d'utilisateurs représenté par le noeud sélectionné en tant que cible à présent sur la base du graphe dirigé représentant les données de résultat d'action jusqu'à ce qu'une condition prédéterminée soit remplie.

12. Support d'enregistrement d'informations lisible par ordinateur dans lequel un programme est stocké, le programme étant destiné à contraindre un ordinateur (2) à fonctionner comme :
une unité d'acquisition de résultat d'action (21) configurée pour acquérir, en ce qui concerne une pluralité d'utilisateurs ou de groupes d'utilisateurs, des données de résultat d'action indiquant un résultat d'une compétition exécutée dans le passé entre la pluralité d'utilisateurs ou de groupes d'utilisateurs, dans lequel la compétition est une compétition de jeu jouée au moyen de terminaux d'utilisateur (3) ; et
une unité de calcul de valeur d'évaluation (22) configurée pour créer un graphe dirigé montrant un utilisateur ou un groupe d'utilisateurs sous la forme d'un noeud et une compétition sous la forme d'un bord, pour définir un nombre N de fois d'exécution en fonction du nombre total d'utilisateurs ou de groupes d'utilisateurs, une précision souhaitée et une charge de traitement, et pour exécuter un processus de traçage sur le graphe dirigé représentant les données de résultat d'action par les multiples N nombres de fois d'exécution et pour calculer une valeur d'évaluation normalisée de chaque utilisateur ou de chaque groupe d'utilisateurs à la suite d'un nombre de fois au moyen duquel le noeud du graphe dirigé représentant l'utilisateur ou le groupe d'utilisateurs est sélectionné en tant que cible dans les multiples nombres de fois du processus de traçage, dans lequel le nombre de fois est divisé par le nombre N de fois d'exécution, le processus de traçage comprenant
un processus de sélection de point de départ sélectionnant de manière aléatoire un noeud représentant un utilisateur ou un groupe d'utilisateurs en tant que cible du processus de traçage parmi la pluralité de noeuds représentant des utilisateurs ou des groupes d'utilisateurs sur le graphe dirigé, et
un processus de sélection de cible effectuant de manière répétitive un processus sélectionnant récemment, en tant que prochaine cible, un noeud représentant un utilisateur concurrent ou un groupe d'utilisateurs concurrents qui a été un concurrent gagnant lors de la compétition réalisée par l'utilisateur ou le groupe d'utilisateurs représenté par le noeud sélectionné en tant que cible à présent sur la base du graphe dirigé représentant les données de résultat d'action jusqu'à ce qu'une condition prédéterminée soit remplie.
